**Europäisches Patentamt**

**European Patent Office**

**Office européen des brevets**

(19)

(11) Veröffentlichungsnummer: **0 394 828**
**A1**

# (12) EUROPÄISCHE PATENTANMELDUNG

(21) Anmeldenummer: **90107394.0**

(22) Anmeldetag: **19.04.90**

(51) Int. Cl.5: **C04B 37/02, B32B 7/00,**
**B32B 18/00, B23K 35/22,**
**B23K 35/20**

(30) Priorität: **22.04.89 DE 3913362**

(43) Veröffentlichungstag der Anmeldung:
**31.10.90 Patentblatt 90/44**

(84) Benannte Vertragsstaaten:
**AT BE CH DE DK FR GB IT LI LU NL SE**

(71) Anmelder: **Forschungszentrum Jülich GmbH**
**Postfach 1913, Wilhelm-Johnen-Strasse**
**D-5170 Jülich(DE)**

(72) Erfinder: **Godziemba - Maliszewski, Jerzy, Dr.**
**Bastionstrasse 10**
**D-5170 Jülich(DE)**
Erfinder: **Lison, Rudolf, Dr.**
**Bussardstrasse 28**
**D-5120 Herzogenrath(DE)**

(54) **Aus Teilkörpern unterschiedlicher Wärmeausdehnung bestehender Verbundkörper, Verfahren zur Herstellung desselben und dafür geeignete Halbzeuge.**

(57) Teilkörper Keramik 2 und Metall 1, werden über ein Zwischenstück 3 unmittelbar oder über eine Aktivlotschicht (5,5') (insbesondere auf der Keramikseite) miteinander verbunden, das aus hochtemperaturfestem inerten Kornmaterial (a) besteht, das insbesondere angrenzend an 2 durch ein davon unterschiedliches Material gebildet wird und aus einer bindefähigen Metallmatrix (b),wobei der Wärmeausdehnungsgradient in 3 global ≤ 40 %/mm, insbesondere ≤ 10 %/mm ist. Angrenzend an 2 bzw. 1 hat das Zwischenstück eine Zone verminderter Wärmeausdehnung, die insbesondere zu 2 hin 22 und 95 % von derjenigen der Keramik beträgt. Der schrittweise oder stufenlose Übergang der Wärmeausdehnung wird durch Mischen entsprechender Materialen (a) und (b) in veränderten Anteilen und/oder von unterschiedlicher Art erreicht. Für die Wärmeausdehnungssenke zur Keramik hin wird insbesondere Matrixmaterial (b) vorgesehen, dessen Wärmeausdehnung bis Anwendungstemperatur < derjenigen der Keramik ist, insbesondere eine Legierung, deren Wärmeausdehnung gleich 0 oder negativ ist. Zur Verbindung von $SiC$ oder $Si_3N_4$ mit Nickelbasislegierungen eignet sich ein Zwischenstück aus Rheniumsiliciden oder Wolframcarbiden (ggf. mit Co) in einer Matrix aus FeNi-Legierung mit Cr oder Co und geringen Legierungszusätzen. Keramik-Einlagen im Zwistück (z.B. Platten, flache Kegel) sind zweckmäßig.

EP 0 394 828 A1

Fig. 2

## Aus Teilkörpern unterschiedlicher Wärmeausdehnung bestehender Verbundkörper, Verfahren zur Herstellung desselben und dafür geeignete Halbzeuge

Die Erfindung bezieht sich auf einen Verbundkörper aus Teilkörpern mit unterschiedlicher Wärmeausdehnung, insbesondere von Keramik und Metall, mit einem spannungsentlastenden Zwischenstück aus einer Mischung von bindefähiger Metallmatrix und inertem hochtemperaturfesten Kornmaterial mit vom Keramikkörper zum Metallkörper verändertem Metallgehalt zur schrittweisen oder stufenlosen Änderung des Wärmeausdehnungskoeffizenten vom Keramikkörper zum Metallkörper, sowie auf ein Verfahren zur Herstellung desselben und auf dafür geeignete Halbzeuge.

Im Vordergrund steht dabei die Verbindung von Teilkörpern aus Keramik, insbesondere Siliciumcarbid oder -nitrid mit metallischem Werkstoffen wie insbesondere Stahl oder Nickelbasislegierungen, bei der aufgrund der unterschiedlichen Wärmeausdehnung für eine Spannungsentlastung gesorgt werden muß, jedoch bereitet die Verbindung von Teilkörpern aus ausschließlich Keramiken oder aus unterschiedlichen Metallen ähnliche Schwierigkeiten, die erfindungsgemäß gelöst werden sollen.

Die Verbindung von Teilkörpern aus Werkstoffen mit unterschiedlicher Wärmeausdehnung ist problematisch: zum einen treten bei Anwendung thermischer Fügeverfahren nach dem Erkalten im Werkstück erhebliche Spannungen am Übergang auf und zum anderen können bei thermischer Belastung solcher Verbundkörper im Fügebereich Wärmespannungen aufgrund der unterschiedlichen Materialeigenschaften entstehen. Da diese Probleme vornehmlich bei der Verbindung von Keramik mit Metall auftreten und in der Literatur entsprechend behandelt sind, wird in der nachfolgenden Beschreibung im wesentlichen auf das System Metall-Keramik bezug genommen.

Für die Verbindung von Keramik mit Metall wurde bereits vorgeschlagen, ein Metallfilz als Übergang vorzusehen (DE-PS 30 14 645).

Von T. Suga wird in "Designing interfaces for technological applications ceramic-ceramic / ceramicmetal joining. Current research and future outlook in Japan". The University of Tokyo (1988) 04/17 01:31 ein Verbindungsschema für Keramik mit Metall skizziert, bei dem zwischen den beiden Materialien eine Übergangszone vorhanden sein soll, in der die Keramik (kornförmig) und das Metall nebeneinander vorliegen mit abnehmendem Keramikanteil zum Metall hin. In welcher Weise solche Körper erzeugt werden sollen, ist jedoch nicht ersichtlich.

Von K. Suganuma u. a. wird in J. Mater. Sci. Letters 4, (1985) 648-50 eine Anpassung am Übergang zwischen Keramik und Metall, wie insbesondere Siliciumnitrid und Stahl, durch einen Mehrschichtübergang z. B. aus Aluminium und Invar angegeben.

In der GB-PS 1 575 443 werden Verbundkörper aus Keramik und Metall als bekannt beschrieben, die über eine ausreichend dicke Zwischenschicht miteinander verbunden sind, die aus Keramik-Metall-Mischungen abgestufter oder fortschreitend veränderter Zusammensetzung zur Erzielung einer gleitenden Anpassung der Wärmeausdehnung besteht.

Verbundkörper, die nach den vorstehend erwähnten Verfahren erhalten werden, erweisen sich als nicht ausreichend bruchfest, insbesondere treten am Übergang zur Keramik hin Rißbildungen und Brüche auf. Ziel der vorliegenden Erfindung ist daher ein aus Teilkörpern mit unterschiedlicher Wärmeausdehnung bestehender Verbundkörper mit verbesserten Eigenschaften, insbesondere Bruchfestigkeit über relativ weite Temperturbereiche hinweg.

Der zu diesem Zweck entwickelte erfindungsgemäße Verbundkörper der eingangs genannten Art ist dadurch gekennzeichnet, daß das Zwischenstück jeweils benachbart zum Teilkörper eine ≧ 0,5 mm dicke Grenzzone aufweist, deren Wärmeausdehnung auf der zum Keramikkörper benachbarten Seite 30 - 100 % von derjenigen des Keramikkörpers und auf der zum Metallkörper benachbarten Seite 15 - 100 % von derjenigen des Metallkörpers beträgt,

und daß das bis zur Anwendungstemperatur chemisch inaktive Kornmaterial der Mischung zumindest in der zum Keramikkörper benachbarten Zone aus einem vom Material des Keramikkörpers verschiedenen Material besteht und bis Anwendungstemperatur des Verbundkörpers eine ≧ 2 % geringere Wärmeausdehnung als der Keramikkörper hat,

wobei der Wärmeausdehnungsgradient im Zwischenstück in Richtung senkrecht zu den Fügeflächen aufgrund der entsprechend gewählten Materialanteile und/oder Materialarten im Zwischenstück maximal 40 %/mm beträgt.

D. h., gemäß der Erfindung wird am Übergang zwischen den Teilkörpern mit unterschiedlicher Wärmeausdehnung und insbesondere von Keramik und Metall ein anpassendes Übergangsstück vorgesehen, das im wesentlichen durch einen Verbund aus Kornmaterial (a) von möglichst geringer Wärmeausdehnung und einem Matrixmaterial (b) gebildet wird, das eine ausreichende Bindefähigkeit für das Kornmaterial

2

besitzt, dieses jedoch nicht angreift, eine ausreichende mechanische Festigkeit hat und pulverförmig zum Kornmaterial zugemischt, bei Heißpreßtemperaturen zu einem weitgehend in sich konsistenten Material konsolidiert werden kann, jedoch bis Anwendungstemperatur des Verbundkörpers mechanisch stabil ist. Dabei hat die Mischung aus (a) und (b) benachbart zum Keramikkörper eine geringere Wärmeausdehnung als dieser, so daß im Grenzbereich zur Keramik hin, insbesondere wenn diese über eine zu Sprödigkeit führende aktive Bindeschicht angefügt wird, für eine Wärmeausdehnungssenke gesorgt werden kann.

Vorzugsweise beträgt die Wärmeausdehnung der Grenzzone auf der zum Keramikkörper benachbarten Seite (bis Anwendungstemperatur des Verbundkörpers) 35 -90 %, insbesondere 70 - 80 % von derjenigen des Keramikkörpers. Die Wärmeausdehnung der Grenzzone des Zwischenstücks auf der zum Metallkörper benachbarten Seite beträgt vorzugsweise 25 - 85 %, insbesondere 55 -75% von derjenigen des Metallkörpers.

Diese Grenzzonen mit vorzugsweiser verminderter Wärmeausdehnung haben insbesondere eine Dicke von 20 bis 100 % des größten Durchmessers bzw. Querschnittsmaßes auf der Keramikseite und von 10 bis 100 % auf der Metallseite.

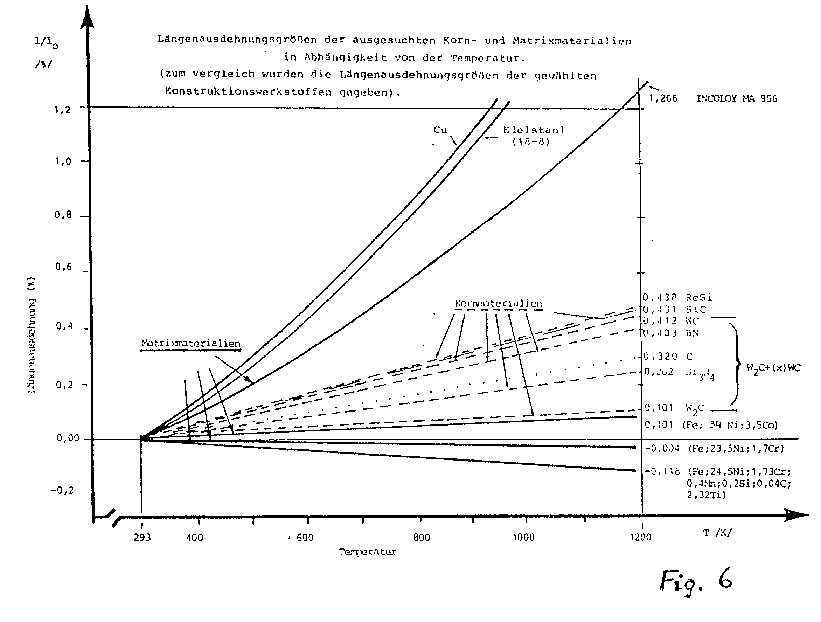

Die Anpassung an die unterschiedlichen Wärmeausdehnungskoeffizienten der zu verbindenden Teilkörper mit Hilfe des Zwischenstücks wird durch entsprechende Materialwahl der Komponenten (a) und (b) erreicht, für die eine Reihe von Materialien in den Tabellen 1 und 2 und Figur 6 angegeben sind. Dabei wird das Zwischenstück insbesondere durch mehrere Schichten mit abgestufte Zusammensetzung und/oder unterschiedlichen Materialien oder Materialmischungen sowie mit abgestufter Korngröße(n) und Kornanteil erzeugt, um von Teilkörper zu Teilkörper einen Wärmeausdehnungsgradienten zu erreichen, der global $\leq$ 40, insb. $\leq$ 10 %/mm sein soll. Diese Forderung kann durch einen Schichtkörper aus mehr oder minder diskreten Schichten erreicht werden, bei dem die Schichtfolge entsprechend gewählt ist oder aber durch ein Zwischenstück mit mehr oder minder kontinuierlich veränderter Eigenschaft von einer Stirnseite zur anderen.

Ein solches Zwischenstück kann gesondert hergestellt werden und mit den Teilkörpern ggf. unter Zwischenschaltung aktiver Bindeschichten durch Löten, Diffusionsschweißen oder (isostatisches) Heißpressen vereinigt werden, wobei insbesondere zum Keramikkörper hin eine aktive Bindeschicht vorgesehen wird, die aus einem Material der Tabelle 3 bestehen kann oder auch durch bekanntes Aktivlot oder MnCu- oder MnCo-Basis-Legierungen gebildet wird, wie sie in der DE-OS 36 08 559 der Anmelderin angegeben sind.

Zweckmäßigerweise umfaßt das Zwischenstück mehrere Schichten von zumindest 0,5 mm Dicke, wobei seine Gesamtdicke von etwa 1 mm bis zum Dreifachen seines größten Durchmessers reichen kann und eine Dicke etwa gleich dem größten Durchmesser bevorzugt wird (bei Teilkörpern mit relativ geringem Durchmesser).

Das Kornmaterial (a) des Zwischenstücks besteht aus nichtmetallischen Pulvern, die chemische Verbindungen sind und sich bis zur Anwendungstemperatur des Verbundkörpers bzw. bis ca. 1200 $^\circ$C in ihrer Umgebung (d.h. gegenüber der Matrix und ggf. vorhandenem Aktivlot) chemisch inert verhalten, wobei (a) zumindest benachbart zur Keramik eine $\geq$ 2 % niedrigere Wärmeausdehnung besitzt als diese Keramik und vorzugsweise eine Wärmeausdehnung aufweist, die im Bereich von 22 bis 95 % von derjenigen des Keramikkörpers liegt. Beispiele für (a) sind in Tabelle 1 angegeben.

Von diesen werden CrSi, CoSi, $Co_2Si$, $Co_3Si$, $Mo_5Si_3$, $Mo_3Si$, ReSi, $Re_3Si$, speziell $Co_2Si$ oder ReSi oder $W_2C$, $W_2C$ 25 WC oder $W_2C$ 25 WC + Co (98 + 2 %) besonders bevorzugt.

Vorzugsweise besteht das Kornmaterial der Mischung zur Herstellung mindestens einer Grenzzone des Zwischenstücks benachbart zum Kerakmikkörper aus einer chemischen Verbindung bzw. einem Material wie $B_4C$; HfC; AlN; BN; HfN; TaN; WC2Co;
mit etwa gleicher Wärmeausdehnung $\alpha$ wie (aber stofflich anders als) der Keramikkörper, vorzugsweise aus einem Material wie
HfO 2,5 Fe 0,3 Mg 0,1 Ti 0,1 Ca; $W_2C$ 25 WC + 2Co (98 + 2 %) $ZrB_2$ + Cr (5 bis 20 % Vol) $Ta_2O_5$; $W_2C$ + WC (0 bis 60 %); $ZrO_2$ 0,37 W 0,37 Co 0,37 C 6,4 Ti;
besonders aus
$W_2C$; $BaO \cdot TiO_2$; $Nb_2O_5$; $Ti_2O_3$; $WO_2$; $Nb_2O_5 \cdot V_2O_5$; $Ta_2O_5 \cdot V_2O_5$; $2ZnO \cdot V_2O_5$; $SrO \cdot ZrO_2$;
mit geringerem $\alpha$ als der Keramikkörper,
insbesondere aus
$ZrO_2$ 6,4 Ti; $ZrO_2$ 2,01 Ti
mit negativer Wärmeausdehnung bis Anwendungstemperatur des Verbundkörpers.

Das Kornmaterial ist in eine Legierungsmatrix, insbesondere aus Vielstofflegierungen, eingebettet, wie sie in Tabelle 2 angegeben sind. Die in Tabelle 2 angegebenen Materialien wurden so ausgewählt, daß sie mit dem Kornmaterial beim Zusammensintern einen Verbundwerkstoff bilden, der eine den zu verbindenden Teilkörpern angepaßte Wärmeausdehnung aufweisen kann.

Vorzugsweise wird die bindefähige Metallmatrix der Mischung durch eine zumindest binäre Metallegierung gebildet und sie hat zumindest in der zum Keramikkörper benachbarten Zone eine etwa gleiche oder geringere Wärmeausdehnung als dieser (speziell keine oder eine negativer Wärmeausdehnung).

Als Materialien für die bindefähige Metallmatrix insbesondere in der Grenzzone des Zwischenstücks benachbart zum Keramikkörper eignen sich Legierungen wie

Fe 18,5 Ni 0,01 Mn 0,1 Si 9 Co 4,9 Mo 0,62 Ti 0,1 P = = 0,05 Ca 0,02 Zr 0,01 S 0,003 B; Fe 30 Ni 8 Cr 25 = = Co; Fe 3,94 Ni 2,5 Cr 0,01 Mn 0,13 Si 0,168 C 0,39 V = = 0,026 S 0,01 P;

mit etwa gleicher oder vorzugsweise Legierungen wie

Fe 34 Ni 3,5 Co; Fe 31 Ni 0,38 Mn 6 Co; Fe 32 Ni 5 = = Co; Fe 39,56 Ni 0,22 Mn 0,12 Si 0,22 Al 0,04 Cu;

mit geringerer oder insbesondere Legierungen wie

Fe 24,4 Ni 1,73 Cr 0,37 Mn 0,2 Si 0,04 C 2,32 Ti; Fe 23,5 Ni 1,77 Cr; Fe 23,5 Ni 1,77 Cr 0,53 Mn = = 0,34 Si 0,05 C 3,28 Ti; Fe 24,5 Ni 1,73 Cr;

mit keiner (infinitesimal) oder negativer (unter Null) Wärmeausdehnung bis Anwendungstemperatur (im Vergleich zum Keramikkörper)

Besonders bevorzugt werden

W10Co; Fe 31,5 Ni 6 Co;

Fe 23,5 Ni 1,77 Cr 0,53 Mn 0,34 Si 0,05 C 3,28 Ti;

Fe 24,5 Ni 1,73 Cr 0,37 Mn 0,2 Si 0,04 C 2,32 Ti;

Fe 23,5 Ni 1,77 Cr; Fe 24,5 Ni 1,73 Cr;

Fe 24,5 Ni 1,73 Cr;

insbesondere W10Co oder eine Fe-Legierung mit 34 % Ni und 3,5 % Co oder eine Mischung derselben.

Speziell für die Verbindung von SiC- oder $Si_3N_4$-Teilkörpern mit Nickelbasislegierungen eignen sich ganz besonders Fe 24,5 Ni 1,73 Cr 0,37 Mn 0,2 Si 0,04 C 2,32 Ti; Fe 23,5 Ni 1,77 Cr und/oder Fe 34 Ni 3,5 Co als Matrixmaterialien vorzugsweise zusammen mit Kornmaterialien wie ReSi; $Re_3Si$; $WC_2$ + WC (0 bis 60 %); $Co_3W_3C$ und/oder $W_2C$ 54 WC + 2 Co (98 + 2 %).

Das im Matrixmaterial des Zwischenstücks verteilte Kornmaterial bildet zweckmäßigerweise einen Anteil zwischen 2 und 98 %, insbesondere zwischen 10 und 90 %. Gestalt und Größe der Körner des Kornmaterials sind frei wählbar, wobei Korndurchmesser in der Gegend von 0,01 bis 3 mm bevorzugt werden. Besonders zweckmäßig sind auch Nadeln von 0,001 - 0,1 Durchmesser und einer Länge bis 1 mm. Zweckmäßigerweise sind Kornmaterial, -durchmesser und -anteil innerhalb des Zwischenstücks gestaffelt, wobei z.B. bis zu 9 Schichten mit zum Metall oder dem Körper mit der größeren Wärmeausdehnung hin abnehmendem Kornanteil und Korndurchmesser vorgesehen sein können.

Zur weiteren Spannungsentlastung und Anpassung des Überganges können im Zwischenstück ein oder mehrere Einlagen aus nicht metallischem, inertem hochtemperaturfesten Material mit geringer Wärmeausdehnung vorhanden sein, die etwa durch Materialien der Tabelle 1 gebildet sein können. Vorzugsweise bestehen die Einlagen aus dem gleichen Material wie das in der Metallmatrix befindliche Kornmaterial. Die Einlagen haben vorzugsweise die Form von Platten oder flachen Kegeln mit einer Dicke ≧ 0,1 bis etwa 8 mm und einem geringeren Durchmesser (z.B. 10 % geringer) als das Zwischenstück selbst, der bis herunter zu etwa 1/5 des Zwischenstückdurchmessers ausmachen kann.

Für die Herstellung der erfindungsgemäßen Verbundkörper werden Korn- und matrixbildendes Material in gewünschter Dicke und ggf. Staffelung der Zusammensetzung und - soweit vorgesehen - mit aktiver Bindeschicht versehene Keramikeinlagen auf die eine oder andere der Fügeflächen der Teilkörper aufgebracht, die zuvor geschliffen, ggf. poliert und gereinigt sowie nach Bedarf mit aktivem Binder versehen wurden. Diese Schichtung wird entweder (nach einseitiger Auftragung) durch Heißpressen oder Diffusionsschweißen konsolidiert und ggf. unter Zwischenschaltung einer aktiven Bindeschicht mit dem ergänzenden Teilkörper verbunden, oder aber der ggf. mit Bindemittel versehene ergänzende Teilkörper wird zusammen mit dem wie angegeben beschichteten Teilkörper einem (isostatischen) Heißpressen oder Diffusionsschweißen zur Erzielung des Verbundkörpers unterworfen.

Man kann auch auf der einen sowie der anderen sich ergänzender Fügeflächen zweier Teilkörper Teilschichtungen vorsehen und entweder vorverdichten und dann zusammenbringen oder zusammengebracht einer konsolidierenden Heißpreß-oder Diffusionsschweiß-Behandlung unterwerfen.

Alternativ kann mit entsprechender Schichtung ein Zwischenstück gesondert erzeugt und bei Bedarf zur Verbindung von Teilkörpern benutzt werden. Das matrixbildende Material wird zweckmäßigerweise in einer Körnung von insbesondere 2 bis 100 μm verwendet.

Nachfolgend wird der Aufbau des Verbindungsbereichs eines erfindungsgemäßen Verbundkörpers anhand der beigefügten schematischen Schnittdarstellungen erläutert; es zeigen

Figur 1 einen Schnitt durch die Verbindung von Kupfer mit SiC-Keramik über ein einschichtiges Zwischenstück mit Keramikeinlage in Kegelform;

Figur 2 ein Schema für die Verbindung von Keramik mit Metall über ein mehrschichtiges Zwischenstück mitgestaffelter Körnung; und

Figur 3 einen Schnitt durch eine Verbindung von Metall (Kovar) mit Keramik (SiC) über ein Zwischenstück mit mehreren Keramikeinlagen.

Figur 4 einen Schnitt durch die Verbindung von Incoloy® MA956 mit Sic-Keramik mit einem Schema der bei Erwärmung von Zimmertemperatur auf 1200K resultierenden Ausdehnung;

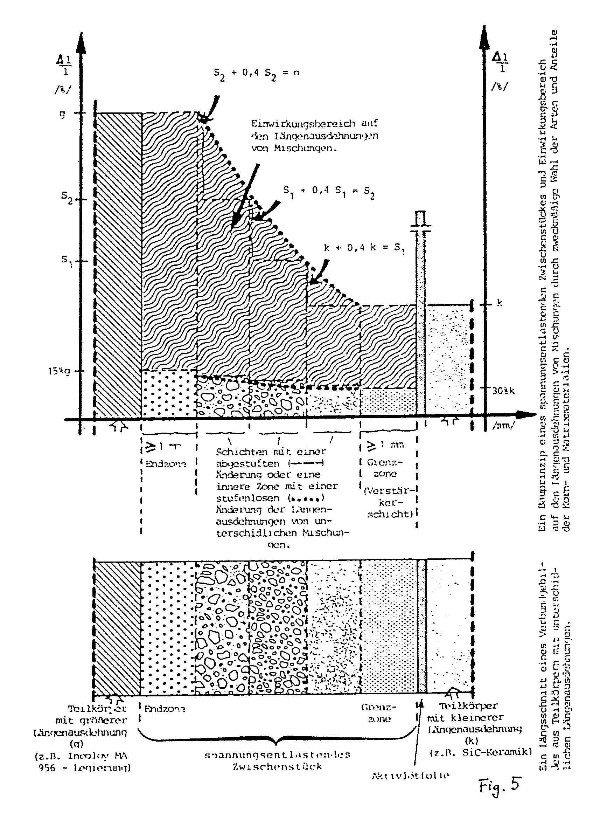

Figur 5 ein Schema für ein mehrschichtiges Zwischenstück zwischen Sic und Incoloy® MA956 und

Figur 6 die Längenausdehnung unterschiedlicher Korn- und Matrixmaterialien und von Konstruktionswerkstoffen in Abhängigkeit von der Temperatur.

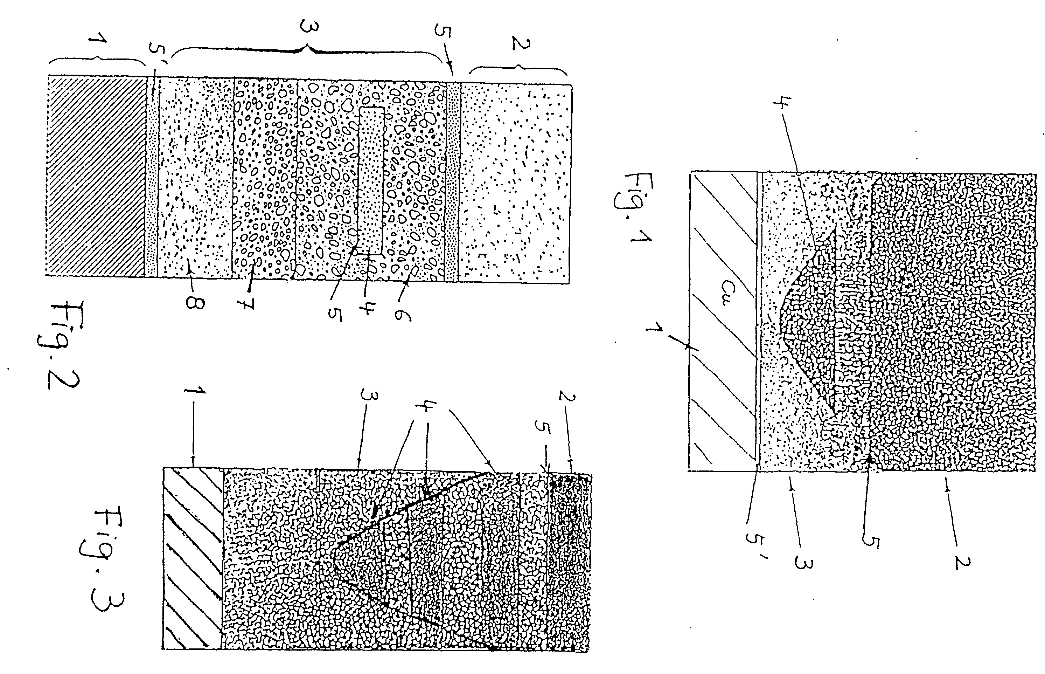

Wie Figur 1 zeigt, ist ein Teilkörper 1 aus Kupfer mit einem Teilkörper 2 aus Keramik über ein Zwischenstück 3 verbunden, das aus einer kornhaltigen Matrix mit fortlaufend veränderter Zusammensetzung sowie mit einer Keramikeinlage 4 besteht und über eine Bindeschicht 5 und ggf. 5' mit den angrenzenden Teilkörpern 1 und 2 zusammenhängt. Der Rand des Keramikteilkörpers 2 ist, wie ersichtlich, abgeschrägt, wodurch von der Keramikgrenzfläche ausgehende Rißbildungen vermindert werden.

In Figur 2 ist ein Schema für eine Verbindung mit geschichtetem Zwischenstück wiedergegeben: hier wird ein Metallteil 1 mit einem Keramikteil 2 über Bindeschichten 5, 5' mittels eines Zwischenstücks 3 verbunden, das eine Keramikeinlage 4 aufweist. Die Schichten 6, 7 und 8 sind unterschiedlich zusammengesetzt mit Kornmaterial von abnehmender Korngröße zum Metall hin und haben beispielsweise folgende Zusammensetzung:

| | |
|---|---|
| - Durchmesser der Verbindung | 12,0 mm |
| - Dicke des körnigen Gefüges 6 | 1,2 mm |
| Mischungsverhältnis: | |
| ReSi 70 Gew.% (Korngröße 0,100 - 0,125 mm)<br>Fe; 23,5 Ni; 1,77 Cr 30 Gew.% (Pulver 6 μm) | Tab. 1<br>Tab. 2 |
| - Keramischer Einsatz 4 aus SiC in Kegelform | |
| Durchmesser<br>Höhe<br>- Dicke des körnigen Gefüges 7 | 6,0 mm<br>2,3 mm<br>2,4 mm |
| Mischungsverhältnis: | |
| ReSi 50 Gew.% (Korngröße 0,050 - 0,071 mm)<br>Fe; 23,5 Ni; 1,77 Cr 50 Gew.% (Pulver 6 μm)<br>- Dicke des körnigen Gefüges 8 | Tab. 1<br>Tab. 2<br>0,5 mm |
| Mischungsverhältnis: | |
| ReSi 40 Gew.% (Korngröße 0,050 - 0,071 mm)<br>Fe; 23,5 Ni; 1,77 Cr 60 Gew.% (Pulver 6 μm) | Tab. 1<br>Tab. 2 |

Die Oberfläche des keramischen Einsatzes sowie die Keramik wurde mit einer aktiven Bindeschicht aus Cu 11,5 Co 17,5 Mn 18,4 Ti 18,4 Cr 5,4 Ni 0,11 Fe in einer Dicke von 0,08 mm versehen. Eine weitere aktive Bindeschicht der genannten Zusammensetzung wird zwischen Metallteil und Zwischenstück vorgesehen und die gesamte Anordnung durch Diffusionsschweißen oder isostatisches Heißpessen (HIP) etwa unter den folgenden Bedingungen

| | |
|---|---|
| Temperatur | 800 bis 1100° C |
| Zeit | 5 bis 40 min |
| Druck | 2 bis 64 MPa |

konsolidiert. An den Grenzflächen zwischen den Schichten 6, 7, 8 kann ebenfalls eine dünne Bindeschicht vorgesehen sein.

Alternativ kann die vorstehend genannte Schichtung ausgehend vom Keramikteil durch Diffusionsschweißen oder HIP konsolidiert und mittels Aktivlot 5' mit der Fügefläche des Metallteils vereinigt werden unter folgenden Lötbedingungen:

| Temperatur | 850 bis 1200 °C |
|---|---|
| Zeit | 2 bis 15 min. |

Figur 3 zeigt eine Verbindung zwischen SiC und Kovar über ein Zwischenstück mit mehreren Keramikeinlagen 4 mit zum Metall hin abnehmendem Durchmesser.

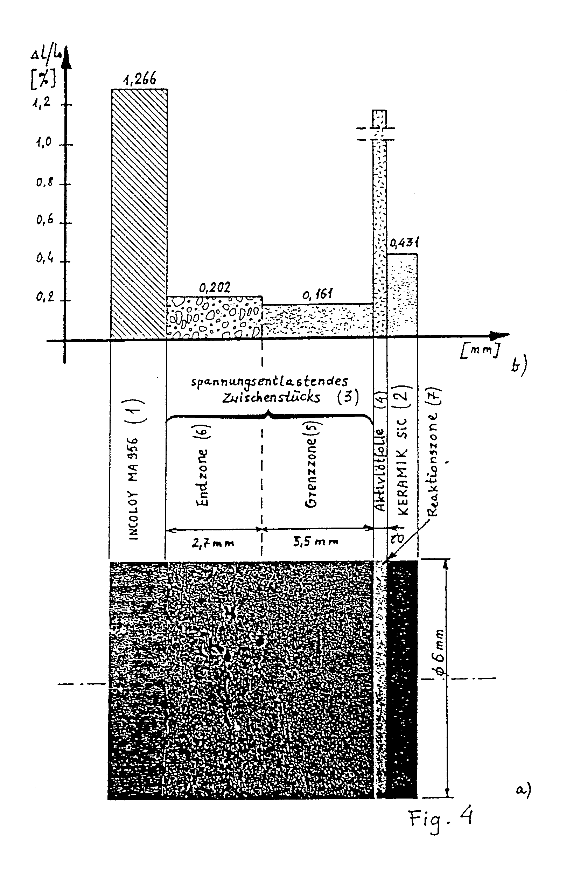

Figur 4 zeigt eine Verbindung (Durchmesser 6mm) zwischen einem Teilkörper 1 aus Incoloy® MA956 (Fe 20 Cr 4,5 Al 0,5 Ti 0,5 $Y_2O_3$) und einem Teilkörper 2 aus Keramik (SiC) über ein Zwischenstück 3, wobei die Oberfläche des keramischen Teilkörpers 2 mit einer bekannten, aktiven Folie (Ag4Ti) 4 in einer Dicke von 0,2 mm versehen wurde.

Das Zwischenstück 3 umfaßt zwei Schichten (5 und 6): Die an den SiC-Teilkörper 2 angrenzende Schicht 5 besteht aus einer Mischung von Kornmaterial (69 ReSi + 31 $Re_3Si$) mit einem Korndurchmesser von 0,025 bis 0,04 mn und aus Matrixmaterial (Fe 24,5 Ni 1,73 Cr 0,37 Mn 0,2 Si 0,04 C 2,32 Ti) mit einem Korndurchmesser von 0 006 mm. Der Kornanteil im Matrixmaterial beträgt 80 %.

Die an den Incoloy-Körper grenzende Schicht 6 besteht aus einer Mischung des gleichen Kornmaterials jedoch mit einem Korndurchmesser von 0,025 bis 0,1 mm mit dem gleichen Matrixmaterial. Hier beträgt der Kornanteil im Matrixmaterial 65 %.

Figur 4b zeigt die Längenausdehnungen der einzelnen Werkstoffe des Verbundkörpers bei Temperatursteigerung auf 1200K. Die Längenausdehnungsminderung im Zwischenstück auf 16% (in 6) und 37 % (in 5) der zu verbindenden, metallischen und keramischen Teilkörper verringert die Wärmespannungen im SiC-Teil.

Nachfolgend wird die Erfindung anhand von Beispielen beschrieben.

Beispiel 1

für die Verbindung von Siliciumcarbid mit Kupfer (Durchmesser 12 mm) wurde die SiC-Fügefläche eines Keramikteils von 1,2 cm Durchmesser durch Schleifen mit einer Diamantenschleifscheibe (Korngröße 30 μm) und anschließendes Entfetten mit Alkohol vorbehandelt. In gleicher Weise wurde auch die Bindefläche einer SiC-Keramik-Einlage von Dicke 2,3 mm vorbehandelt.

Auf beide (SiC) -Bindeflächen wurde eine 0,08 mm dicke aktive Bindeschicht aus einem Pulver von 6 μm Korngröße der Zusammensetzung: Cu-Basis mit 11,5 % Co, 17,5 % Mn, 18,4 % Ti, 18,4 % Cr, 5,4 % Ni, 0,11 % Fe und einem CEMENT (Wallcolmonoy Ltd) aufgetragen und an der Luft getrocknet.

Zwischen die so vorbehandelten Füge- bzw. Bindeflächen des Siliciumcarbids wurde eine 1,2 mm dicke Schicht aus einer Mischung von ReSi-Pulver (Korngröße 0,1 -0,125 mm; 70 Gew.%) und Matrixmaterial auf Fe-Basis mit 23,5 % Ni, 1,77 % Cr (30 Gew.%) von 6 μm Korngröße eingebracht und die mit einem Druck von 40 MPa belastete Anordnung im Vakuum oder Inertgas (AR, $N_2$) 20 Minuten lang auf 930 °C aufgeheizt.

Nach dem Erkalten (0,3 °/s) wurde die freie Fläche in Kegelform geschliffen und danach (in beschriebener Weise) mit einer aktiven Bindeschicht versehen.

Zwischen die so vorbereitete SiC-Bindefläche und ein Kupferteil von gleichem Durchmesser (geschliffen mit Schleifpapier 320 und entfettet mit Alkohol) wurde eine 2,4 mm dicke Schicht aus ReSi-Pulver (Korngröße 50 bis 71 μm; 50 Gew.%) und Matrixmaterial (50 Gew.%; Korngröße 6 μm) und eine 0,5 mm dicke Schicht aus ReSi-Pulver (40 Gew.%) und Matrixmaterial (60 Gew.%) mit den vorstehenden Korngrößen eingebracht und die mit einem Druck von 40 MPa belastete Anordnung im Vakuum oder Inertgas (Ar) 20 Minuten lang auf 930 °C aufgeheizt. Der erhaltene Verbundkörper hatte im wesentlichen das in Figur 1 skizzierte Gefüge mit einer Schichtung wie vorstehend.

Beispiel 2

Zur Verbindung von SiC mit Cu (jeweils von 9 mm Durchmesser) wurden die Siliciumcarbid- und Kupferbindeflächen wie in Beispiel 1 gereinigt. Sodann wurde auf die Keramikbindefläche eine Aktivlotfolie aus Ag4Ti-Legierung (Dicke 0,2 mm, entfettet mit Alkohol) aufgebracht und danach wurden zwischen das Siliciumcarbidteil (mit Lötfolie) und das Kupferteil drei Pulverschichten der gleichen Zusammensetzung und Korngröße wie in Beispiel 1, aber mit einer Dicke von 1,7; 0,4 und 0,4 mm eingebracht und die gesamte Anordung einem Diffusionsschweißverfahren wie in Beispiel 1 unterworfen.

Beispiel 3

Zur Verbindung eines Teilkörpers aus Fernico Stahl (Fe28Ni22Co) von 9 mm Durchmesser mit einem Teilkörper aus Siliciumcarbid wurde die Verbindungsfläche des Stahls geschliffen (mit Schleifpapier 320) und mit Alkohol entfettet. Das Stahl-Teil wurde in eine Form gelegt und mit drei Pulverschichten bedeckt:

Von diesen hatte die erste (auf der Fernico Seite) eine Dicke von 2,2 mm und bestand aus einer Pulvermischung von $ReSi + Mo_3Si$ (40 + 30 Gew.%; Korngröße 0,1 -0,14 mm) mit Matrixmaterial Fe 23,5Ni1,77Cr (30 Gew.%; Korngröße 6$\mu$m) und wurde nach dem Einbringen mit 5 MPa belastet. Die zweite Schicht hatte eine Dicke von 2,1 mm und betand aus $ReSi + Mo_3Si$ (20 + 30 Gew.%) und Matrixmaterial Fe23,5Ni1,77Cr (50 Gew.%) (Korngröße 50- 70 und 6 $\mu$m) und wurde nach dem Einbringen mit 5 MPa belastet. Danach wurde die dritte Schicht in einer Dicke von 1 8 mm aus $Mo_3Si$ (40 Gew.%) und Matrixmaterial Fe23,5Nil,77Cr ( 60 Gew.%) (Korngrößen wie bei der zweiten Schicht) aufgebracht und mit 5 MPa belastet. Die gesamte Anordung wurde schließlich unter einem Druck von 30 MPa im Vakuum 35 Minuten lang zum Diffusionsschweißen auf 1000° C aufgeheizt.

Der erhaltene Körper auf Fernico Stahl und einem spannungsentlasteten Werkstoffverbund (FSsWv) wurde als Halbzeug zur Verbindung mit einem Siliciumcarbidteil angewandt Die FSsWv-Bindefläche und die SiC-Bindeflächen wurden mit Schleifpapier 320 geschliffen (oder mit einer Diamantschleifscheibe der Korngröße 30 $\mu$m), mit Alkohol entfettet und nach dem Zusammenbringen unter Zwischenschaltung einer 0,2 mm dicken, mit Alkohol entfetteten Ag4Ti-Folie mit einem Druck von 53 MPa belastet und in Vakuum oder Inertgas (Ar) 20 Minuten lang zum Diffusionsschweißen auf 920° C aufgeheizt.

Auf diese Weise wurde eine feste Verbindung zwischen der Keramik und dem Metall erzielt.

Beispiele 4 bis 9

In der angefügten Tabelle 4 sind Zwischenstückzusammensetzungen angegeben für die Verbindung unterschiedlicher Werkstoffe. Dabei zeigt Spalte 5 die jeweiligen Grenzzusammensetzungen zu den Fügeflächen der Teilkörper hin. Für die dazwischenliegenden Schichten des Zwischenstücks werden dan abgestufte zwischen den Grenzzusammensetzungen liegende Mischungsverhältnisse gewählt. Zusätzlich kann bzw. soll die Korngröße der Komponente (a) zum Material mit der größeren Wärmeausdehnung hin verringert werden.

Tabelle 1:  Kornmaterialien (a)

| Material | Längenausdehnung ($\Delta$L/Lo) Temperaturbereich (20 - 1000°C) | Ausdehnungskoeffizient ($1/K \cdot 10^{-6}$) | Schmelztemperatur (°C) | Testtemperatur |
|---|---|---|---|---|
| **SILICIDE** | | | | |
| $BaSi_2$ | 0,0 bis 0,746 | | | |
| CrSi | 0,0 " 0,890 | 9,47 | 1600 | |
| CoSi | 0,0 " 1,407 | 10,31 " 12,64 | 1460 | |
| $Co_2Si$ | | 3,1 " 4,2 | – | |
| $Co_3Si$ | 0,0 " 1,400 | – | – | |
| $FeSi_2$ | 0,0 " 0,650 | – | 1210 | |
| $Mo_5Si_3$ | | 3,8 " 4,8 | 2320 | |
| $Mo_3Si$ | 0,0 " 0,590 | 3,4 " | 2125 | |
| ReSi | 0,0 " 0,438 | 2,7 " | 1860 | |
| $Re_3Si$ | 0,0 " 0,582 | 3,0 " 3,7 | 1960 | |
| $NbSi_2$ | 0,0 " 0,711 | – | – | |
| $U_3Si_2$ | 0,0 " 0,155 | – | – | |
| $W_5Si_3$ | | 3,8 " 4,8 | 2320 | |
| **BORIDE** | | | | |
| $TbB_{12}$ | 0,0 bis 0,374 | 1,5 bis 5,5 | 2340 | |
| $TmB_{12}$ | 0,0 " 0,405 | 1,7 " 6,2 | – | |
| $YB_{12}$ | 0,0 " 0,374 | 1,6 " 6,1 | 2200 | |
| $YbB_{12}$ | 0,0 " 0,430 | 2,2 " 6,2 | – | |
| $HoB_{12}$ | 0,0 " 0,408 | 3,4 " 5,7 | – | 900°C |
| TaB | 0,0 " 0,52 | – | 2800 | |
| $SiB_6$ | 0,0 " 0,517 | – | 1950 | |
| $SiB_4$ | 0,0 " 0,62 | – | – | |
| WB | 0,0 " 0,65 | – | – | |
| $ZrB_2$ | 0,0 " 0,613 | 5,2 " 8,0 | 3040 | |
| $HfB_2$ | 0,0 " 0,622 | 5,8 " 7,8 | 3200 | |

| Material | Längenaus-dehnung ($\Delta L/L_0$) | Ausdehnungs-koeffizient ($1/K \cdot 10^{-6}$) | Schmelz-temperatur (°C) | Bemer-kungen (Test-temperatur) |
|---|---|---|---|---|
| | | | | |

Temperaturbereich (20 - 1000°C)

**CARBIDE**

| | | | | |
|---|---|---|---|---|
| $B_4C$ | 0,0 bis 0,483 | 4,8 bis 6,3 | 2480 | |
| HfC | 0,0 " 0,607 | 4,9 " 7,2 | 3880 | |
| $Mo_2C$ | 0,0 " 0,530 | 5,1 " 6,5 | 2690 | |
| $W_2C$ + WC (0 bis 60 %) | 0,0 " < 0,430 | – | 2870 | |
| $W_2C$ | – | 1,2 " | 2750 | |
| ZrC | '0,0 " 0,607 | 4,0 " 8,1 | 2820 | |
| SiC | 0,0 " 0,431 | 3,3 " 5,6 | 2970 | |

**NITRIDE**

| | | | | |
|---|---|---|---|---|
| AlN | 0,0 bis 0,468 | 2,5 bis 6,3 | 2400 | |
| BN | 0,0 " 0,403 | 1,8 " 6,8 | 3000 | |
| $Si_3N_4$ | 0,0 " 0,262 | 0,8 " 3,6 | 1900 | |
| HfN | 0,0 " 0,58 | – | 3300 | |
| ScN | 0,0 " 0,444 | – | – | |
| TaN | 0,0 " 0,531 | – | 3100 | |

**PHOSPHIDE**

| | | | | |
|---|---|---|---|---|
| BP | 0,0 bis 0,434 | 2,9 bis 5,6 | – | |

**KERAMIKEN**

| | | | | |
|---|---|---|---|---|
| $BaOTiO_2$ | 0,0 bis 0,114 | – | 1185 | 210°C |
| ZrBe (70/30) | 0,0 " 0,268 | – | – | 800°C |

| Material | Längenaus-dehnung ($\Delta L/L_0$) | Ausdehnungs-koeffizient ($1/K \cdot 10^{-6}$) | Schmelz-temperatur (°C) | Test-temp. |
|---|---|---|---|---|

Temperaturbereich (20 - 1000 °C)

| Material | Längenausdehnung | Ausdehnungskoeffizient | Schmelztemperatur | Testtemp. |
|---|---|---|---|---|
| CERMET | - | - | - | |
| HfO 2,5 Fe | | | | |
| 0,3 Mg | 0,0 bis 0,36 | - | - | |
| 0,1 Ti | | | | |
| 0,1 Ca | | | | |
| WC+2Co | 0,0 " 0,433 | 4,2 bis 4,9 | - | |
| W$_2$C 25WC + Co (98 + 2%) | 0,0 " < 0,380 | - | - | |
| ZrO$_2$ 0,37 W 0,37 Co 0,37 C 6,1 Ti | 0,0 " 0,438 | - | - | |
| ZrB$_2$+Cr (1 bis 20 %) | 0,0 " 0,366 | - | - | |
| Co$_3$W$_3$C | 0,0 " 0,433 | - | - | |
| ZrO$_2$ 2,01 Ti | 0,0 " -0,422 | - | - | |
| ZrO$_2$ 6,4 Ti | 0,0 " -0,472 | - | - | |
| OXIDKERAMIKEN | | | | |
| Nb$_2$O$_5$ | 0,0 bis 0,210 | 0,7 bis 3,5 | 1510 | |
| Ta$_2$O$_5$ | 0,0 " 0,337 | - | 1870 | |
| Ti$_2$O$_3$ | 0,0 " 0,250 | 9,0 " 1,6 | 2130 | 300°C |
| WO$_2$ | 0,0 " 0.183 | 2,6 " 4,1 | 1570 | 550°C |
| Nb$_2$O$_5 \cdot$V$_2$O$_5$ | 0,0 " 0,121 | - | | 800°C |
| Ta$_2$O$_5 \cdot$V$_2$O$_5$ | 0,0 " 0,020 | - | | 800°C |
| 2 ZnO$\cdot$V$_2$O$_5$ | 0,0 " 0,106 | - | | 550°C |
| SrO$\cdot$ZrO$_2$ | 0,0 " 0,090 | 0,75 " 1,17 | 2750 | 800°C |

Die genannten Kornmaterialien werden als technische Produkte selbstverständlich Herstellungstoleranzen bis zu 20 % in ihrer angegebenen Zusammensetzung aufweisen.

Tabelle 2:  Matrixmaterialien (b)

| Material | Längenaus-dehnung ($\Delta L/L_0$) | Ausdehnungs-koeffizient ($1/K \cdot 10^{-6}$) | Schmelz-temperatur (°C) | Bemer-kungen (Testtempe-ratur) |
|---|---|---|---|---|
| | Temperaturbereich (20 - 1000 °C) | | | |
| W10Co | 0,0 bis 0,561 | 4,9 bis 7,3 | - | |
| No20Nb | 0,0  "  0,475 | 5,7  "  6,2 | - | |
| Mo50Re | 0,0  "  0,444 | 5,5  "  7,1 | - | |
| MoO,5Ti | 0,0  " ,0,538 | 5,1  "  6,9 | - | |
| Mo30W | 0,0  "  0,492 | 4,9  "  6,2 | - | |
| Mo10V | 0,0  "  0,497 | 5,6  "  6,7 | - | |
| Re75W | 0,0  "  0,485 | - | - | |
| Fe 34 Ni 3,5 Co | 0,0  "  0,101 | - | - | 400°C |
| Fe 31,5 Ni 6 Co | 0,0  "  0,118 | - | - | 450°C |
| Fe 24,5 Ni 1,73 Cr 0,37 Mn 0,2 Si 0,04 C 2,32 Ti | 0,0  "  -0,135 | - | - | 750°C |
| Fe 23,5 Ni 1,77 Cr | 0,0  "  -0,004 | - | - | |

Tabelle 2: (Weiterführung)

Fe 23,5 Ni
1,77 Cr
0,53 Mn        0,0 bis -0,095        -            -
0,34 Si
0,05 C
3,28 Ti

---

Fe 24,5 Ni        0,0  " -0,030        -            -
1,73 Cr

---

Fe 18,5 Ni
0,01 Mn 0,1 Si
9,0 Co 4,9 Mo  0,0  "  0,408        4,79 bis 5,58  -          410°C
0,62 Ti 0,1 P
0,05 Ca 0,02 Zr
0,01 S 0,003 B

---

Fe 30 Ni        0,0  "  0,492        -            -          450°C
8 Cr 25 Co

---

Fe 33,5 Ni        0,0  "  0,113        -            -          326°C
4 Co

---

Fe 31 Ni        0,0  "  0,142        -            -          350°C
0,38 Mn 6 Co

---

Fe 32 Ni        0,0  "  0,400        -            -          480°C
5 Co

---

Fe 39,56 Ni      0,0  "  0,460        -            -          410°C
0,22 Mn 0,12 Si
0,22 Al 0,04 Cu

---

Tabelle 2: (Weiterführung)

Fe 3,94 Ni     0,0   bis 0,824         –          –         795°C

2,50 Cr 0,01 Mn 0,13 Si 0,168 C 0,39 V 0,0026 S

0,01 P

Tabelle 3

| Aktive Bindeschicht (für einen Werkstoff mit geringem Verformungsvermögen) | |
|---|---|
| Nr. | Werkstoffbezeichnung |
| 1 | Co; 25 Cr; 25 Ti; 19 Mn; 5 Ni |
| 2 | Co; 13 Cu; 7 Cr; 7,5 Mn, 7 Ti; 2 Ni |
| 3 | siehe DE 3608559 Al |

Tabelle 4

| 1 | 2 | 3 | 4 | 5 | |
|---|---|---|---|---|---|
| Verbindung von (1) + (2) | Zus. des Zwischen- stücks aus Kornmaterial (a) / Matrix (b) | Korngröße /µm/ | annähernde Anzahl der Schichten ... | Grenzzus. der Mischpulver (Gew.%) **** (2)-Seite (1)-Seite | |
| | | | | von | bis |
| C(Graphit) + + Kupfer * | $W_2C$ | 40 - 140 | | 30 | 0 |
| | $ZrO_2$; 0,37W; 0,37Co; 0,37C; 0,1Ti | 40 - 70 | 6 | 60 | 10 |
| | Fe; 23,5Ni; 1,77Cr; | 6 | | 10 | 30 |
| | Fe; 34Ni; 3,5Co; | 6 | | 0 | .. 40 |
| | Co; 20Nb; 0,5Fe; 0,2Ni; | 6 | | 0 | 20 |
| Wolfram + + Edelstahl (18-8) | ReSi | 25 - 140 | | 45 | 0 . |
| | $W_5Si_3$ | 40 - 140 | | 48 | 0 |
| | $Co_2Si$ | 40 - 140 | 8 | 0 | 5 |
| | CrSi | 40 - 140 | | 0 | 5 |
| | Fe; 31,5Ni; 6Co; | 6 | | 10 | 60 |
| | Co; 20Nb; 0,5Fe; 0,2Ni; | 6 | | 0 | 30 |

EP 0 394 828 A1

14

| 1 | 2 | 3 | 4 | 5 | |
|---|---|---|---|---|---|
| Si₃N₄ + + Fernico- -Stahl | ReSi | 25 - 140 | | 40 | 20 |
| | TbB₁₂ | 25 - 70 | 8 | 35 | 0 |
| | Nb₂O₅ | 25 - 70 | | 20 | 0 |
| (Fe 28Ni 22 Co) *, ** | Fe; 23,5Ni; 1,77Cr; | 6 | | 10 | 60 |
| | Co; 20Nb; 0,5Fe; 0,2Ni | 6 | | 0 | 30 |
| BN + + Fernico -Stahl | W₂C | 25 - 70 | | 20 | 10 |
| | ZrO₂; 0,37W; 0,37Co; 0,37C; 0,1Ti | 40 - 70 | 7 | 20 | 0 |
| | Nb₂O₅ | 40 - 140 | | 50 | 0 |
| (Fe 28Ni 22Co) *, ** | Fe; 23,5Ni; 1,77Cr | 6 | | 10 | 55 |
| | Co; 20Nb; 0,5Fe; 0,2Ni | 6 | | 0 | 15 |
| | Mo; 10V; | 6 | | 0 | 20 |
| Al₂O₃ + + Edelstahl (18-8) * | Mo₃Si | 40 - 140 | | 50 | 10 |
| | ReSi | 25 - 70 | 6 | 20 | 0 |
| | BN | 25 - 70 | | 20 | 0 |
| | Fe; 23,5Ni; 1,77Cr; | 6 | | 10 | 45 |
| | Fe; 34Ni; 3,5Co; | 6 | | 0 | 45 |

EP 0 394 828 A1

EP 0 394 828 A1

| 1 | 2 | 3 | 4 | 5 | |
|---|---|---|---|---|---|
| SiC + + Incoloy MA 956 * | ReSi | 40 - 140 | | 25 | 5 |
| | $W_2C$ | 25 - 70 | 7 | 5 | 5 |
| | $Nb_2O_5$ | 40 - 140 | | 45 | 0 |
| | Fe; 23,5Ni; 1,77Cr; | 6 | | 10 | 40 |
| | Co; 20Nb; 0,5Fe; 0,2Ni; | 6 | | 0 | 25 |
| | Mo30W | 6 | | 5 | 25 |
| SiC + SiC * (HS) | ReSi | 40 - 50 | 1 | 25 | |
| | $Co_2Si$ | 125 - 140 | | 65 | |
| | Fe; 23,5Ni; 1,77 Cr; | 6 | (≤ 1,0 mm) | 10 | |
| SiC + + Incoloy MA 956 * | $W_2C$;10WC;10W; | 25 - 70 | 4 | 80 | 0 |
| | | 125 - 140 | | 0 | 45 |
| | | 50 - 125 | | 68 | 48 |
| | Fe;31,5Ni;6Co; | 6 | | 32 | 52 |

| 1 | 2 | 3 | 4 | 5 | |
|---|---|---|---|---|---|
| SiC + <br> + Incoloy <br> MA 956 | $ReSi;23Re_3Si;8ReSi_2;$ | 25 - 100 | | 0 | 80 |
| | | 25 - 40 | 2 | 65 | 0 |
| | $Fe;24,5Ni;1,7Cr;0,37Mn;0,2Si;$ <br> $0,04C;2,32Ti;$ | 6 | | - | - |

   * = mit aktiver Bindeschicht auf der Seite des nichtmetallischen Teilkörpers;

   ** = keramischer Einsatz aus $Ta_2O_5 \cdot V_2O_5$ (kegelförmig)

   *** = steigt mit den Abmessungen der Verbindung

   **** = (1)-Seite: bedeutet auf der Grenzfläche zum Teilkörper mit größerer Wärmeausdehnung

        (2)-Seite: bedeutet auf der Grenzfläche zum Teilkörper mit geringerer Wärmeausdehnung

EP 0 394 828 A1

**Ansprüche**

1. Verbundkörper aus Teilkörpern mit unterschiedlicher Wärmeausdehnung, insbesondere von Keramik und Metall, mit einem spannungsentlastenden Zwischenstück aus einer Mischung von bindefähiger Metallmatrix und inertem hochtemperaturfesten Kornmaterial mit vom Keramikkörper zum Metallkörper verändertem Metallgehalt zur schrittweisen oder stufenlosen Änderung des Wärmeausdehnungskoeffizienten vom Keramikkörper zum Metallkörper,
**dadurch gekennzeichnet,**
daß das Zwischenstück jeweils benachbart zum Teilkörper eine $\geq$ 0,5 mm dicke Grenzzone aufweist, deren Wärmeausdehnung auf der zum Keramikkörper benachbarten Seite 30 - 100 % von derjenigen des Keramikkörpers und auf der zum Metallkörper benachbarten Seite 15 - 100 % von derjenigen des Metallkörpers beträgt,
und daß das bis zur Anwendungstemperatur chemisch inaktive Kornmaterial der Mischung zumindest in der zum Keramikkörper benachbarten Zone aus einem vom Material des Keramikkörpers verschiedenen Material besteht und bis Anwendungstemperatur des Verbundkörpers eine $\geq$ 2 % geringere Wärmeausdehnung als der Keramikkörper hat,
wobei der Wärmeausdehnungsgradient im Zwischenstück in Richtung senkrecht zu den Fügeflächen aufgrund der entsprechend gewählten Materialanteile und/oder Materialarten im Zwischenstück maximal 40 %/mm beträgt.

2. Verbundkörper nach Anspruch 1,
**dadurch gekennzeichnet,**
daß die Wärmeausdehnung der Grenzzone auf der zum Keramikkörper benachbarten Seite bis Anwendungstemperatur des Verbundkörpers 35 - 90 %, insbesondere 70 - 80 % von derjenigen des Keramikkörpers beträgt.

3. Verbundkörper nach Anspruch 1 oder 2,
**dadurch gekennzeichnet,**
daß die Wärmeausdehnung der Grenzzone des Zwischenstücks auf der zum Metallkörper benachbarten Seite bis Anwendungstemperatur des Verbundkörpers 25 -85 %, insbesondere 55 - 75 % von derjenigen des Metallkörpers beträgt.

4. Verbundkörper nach einem der vorangehenden Ansprüche,
**dadurch gekennzeichnet,**
daß das Kornmaterial des Zwischenstücks zumindest in der zum Keramikkörper benachbarten Zone bis Anwendungstemperatur des Verbundkörpers eine Wärmeausdehnung von 22 - 95 % von derjenigen des Keramikkörpers aufweist.

5. Verbundkörper nach einem der vorangehenden Ansprüche,
**dadurch gekennzeichnet,**
daß zwischen dem Zwischenstück und dem Keramikkörper eine aktive Bindeschicht vorgesehen ist.

6. Verbundkörper nach einem der vorangehenden Ansprüche,
**dadurch gekennzeichnet,**
daß die Dicke der Grenzzone des Zwischenstücks auf der Keramikseite 20 - 100 % und auf der Metallseite 10 - 100 % des größten Querschnittsmaßes der entsprechenden Bindefläche beträgt.

7. Verbundkörper. nach einem der vorangehenden Ansprüche,
**gekennzeichnet durch**
eine Dicke des Zwischenstücks zwischen 1 mm und dem Dreifachen seines größten Querschnittsmaßes, insbesondere vom etwa Einfachen des größten Querschnittsmaßes.

8. Verbundkörper nach einem der vorangehenden Ansprüche,
**gekennzeichnet durch**
einen Kornmaterialanteil in dem Matrixmaterial zwischen 5 und 98 %.

9. Verbundkörper nach einem der vorangehenden Ansprüche,
**gekennzeichnet durch**
Korndurchmesser von 0,01 - 3 mm.

10. Verbundkörper nach einem der vorangehenden Ansprüche,
**gekennzeichnet durch**
Schichten abgestufter Wärmeausdehnung aus unterschiedlichen Korn- und/oder Matrixmaterialien.

11. Verbundkörper nach Anspruch 5,

**dadurch gekennzeichnet,**

daß die aktive Bindeschicht aus einer Kobaltlegierung oder einer Legierung auf MnCu- oder MnCo-Basis oder Aktivlot besteht.

12. Verbundkörper nach einem der vorangehenden Ansprüche,

**dadurch gekennzeichnet,**

daß das Zwischenstück ein oder mehrere Einlagen aus Keramik, insbesondere in Form von Platten oder flachen Kegeln aufweist, die über eine aktive Bindeschicht mit dem Matrixmaterial vereinigt sind.

13. Verbundkörper nach einem der vorangehenden Ansprüche,

**dadurch gekennzeichnet,**

daß die äußere Kante der Fügefläche des Keramikteils kegelstumpfartig vom Verbindungsbereich weg abgeschrägt ist.

14. Verbundkörper nach einem der vorangehenden Ansprüche,

**dadurch gekennzeichnet,**

daß die bindefähige Metallmatrix des Zwischenstücks zumindest in der Grenzzone benachbart zum Keramikkörper aus einer der Legierungen

Fe 18,5 Ni 0,01 Mn 0,1 Si 9 Co 4,9 Mo 0,62 Ti 0,1 P 0,05 Ca 0,02 Zr 0,01 S 0,003 B; Fe 30 Ni 8 Cr 25 Co;
Fe 3,94 Ni 2,5 Cr 0,01 Mn 0,13 Si 0,168 C 0,39 V 0,026 S 0,01 P;

vorzugsweise aus

Fe 34 Ni 3,5 Co; Fe 31 Ni 0,38 Mn 6 Co; Fe 32 Ni 5 Co; Fe 39,56 Ni 0,22 Mn 0,12 Si 0,22 Al 0,04 Cu;

insbesondere aus

Fe 24,5 Ni 1,73 Cr 0,37 Mn 0,2 Si 0,04 C 2,32 Ti; Fe 23,5 Ni 1,77 Cr; Fe 23,5 Ni 1,77 Cr 0,53 Mn 0,34 Si 0,05 C 3,28 Ti; Fe 24,5 Ni 1,73 Cr; besteht.

15. Verbundkörper nach einer der vorangehenden Ansprüche,

**dadurch gekennzeichnet,**

daß das Kornmaterial des Zwischenstücks zumindest in der Grenzzone benachbart zum Keramikkörper durch

$B_4C$; HfC; AlN; BN; HfN; TaN; WC2CO;

vorzugsweise durch

HfO 2,5 Fe 0,3 Mg 0,1 Ti 0,1 Ca; $W_2C$ 25 WC + 2 CO (98 + 2 %) $ZrB_2$ + Cr (5 bis 20 % Vol) ; $Ta_2O_5$; $W_2C$ + WC (0 bis 60 %); $ZrO_2$ 0,37 W 0,37 Co 0,37 C 6,4 Ti;

inbesondere durch

$W_2C$; $BaO \cdot TiO_2$; $Nb_2O_5$; $Ti_2O_3$; $WO_2$; $Nb_2O_5 \cdot V_2O_5$; $Ta_2O_5 \cdot V_2O_5$; $2ZnO \cdot V_2O_5$; $SrO \cdot ZrO_2$;

und speziell durch $ZrO_2$ 6,4 Ti oder $ZrO_2$ 2,01 Ti gebildet wird.

16. Verbundkörper nach einer der vorangehenden Ansprüche aus einem SiC- oder $Si_3N_4$-Teilkörper und einem Nickelbasislegierungsteilkörper,

**dadurch gekennzeichnet,**

daß das Matrixmetall des Zwischenstücks durch

Fe 24,5 Ni 1,73 Cr 0,37 Mn 0,2 Si 0,04 C 2,32 Ti;
Fe 23,5 Ni 1,77 Cr und/oder Fe 34 Ni 3,5 Co gebildet wird.

17. Verbundkörper nach einer der vorangehenden Ansprüche, insbesondere nach Anspruch 11,

**dadurch gekennzeichnet,**

daß das Kornmaterial des Zwischenstücks durch ReSi; $Re_3Si$; $W_2C$ + WC (0 bis 60 %); $Co_3W_3C$ und/oder $W_2C$ 54WC + 2Co (98 + 2 %) gebildet wird.

18. Zwischenstück zum Verbinden von Teilkörpern aus Keramik und Metall zu einem Verbundkörper nach einem der vorangehenden Ansprüche, bestehend aus Kornmaterial und Matrixmaterial sowie ggf. ein oder mehreren Einlagen der genannten Art mit derart vom Teilkörper mit der geringeren Wärmeausdehnung zum Teilkörper mit der höheren Wärmeausdehnung zunehmendem Wärmeausdehnungskoeffizienten, daß der Wärmeausdeh nungsgradient senkrecht zu den Fügeflächen höchstens 40 %/mm beträgt, deren Wärmeausdehnung derjenigen der zu verbindenden Teilkörper angepaßt ist, wobei jeweils ≥ 0,5 mm dicke Oberflächenzonen von geringerer Wärmeausdehnung als die anzuschließende Fügefläche vorgesehen sind.

19. Halbzeug, insbesondere Keramik-Halbzeug, mit einer zum Fügen mit einem Werkstück von unterschiedlicher Wärmedehnung vorbereiteten Fügeflächen, die - ggf. über eine aktive Bindeschicht - mit einem Zwischenstück aus Korn- und Matrixmaterial und ggf. eingelagerten Kompakteinlagen nach Anspruch 18 versehen ist.

20. Verfahren zur Herstellung eines Verbundkörpers nach einem der Ansprüche 1 bis 17,

**dadurch gekennzeichnet,**

daß man eine Pulvermischung oder Pulvermischungen aus Kornmaterial und matrixbildendem Material in gewünschter Dicke und ggf. Staffelung, ggf. zusammen mit der oder den Keramikeinlage(n) auf die eine und/oder andere der Fügeflächen der Teilkörper, ggf. unter Zwischenschaltung einer aktiven Bindeschicht, aufbringt und die über die Schichtung vereinigten Teilkörper durch Sintern oder Heißpressen oder Diffusionsschweißen miteinander verbindet oder die Schichtung oder Teilschichtungen zunächst durch Sintern oder Heißpressen oder Diffusionsschweißen gesondert oder mit dem einen und/oder anderen Teilkörper (ggf. teil-)konsolidiert und den Verbundkörper schließlich durch ein Fügeverfahren, insbesondere durch Löten, vereinigt.

21. Verfahren nach Anspruch 20,

**dadurch gekennzeichnet,**

daß man das matrixbildende Material in einer Körnung von 2 - 100 μm verwendet

Fig. 1

Cu

Fig. 2

Fig. 3

$\Delta L/L_0$ [%]

1,266

1,2

1,0

0,8

0,6

0,431

0,4

0,202

0,161

0,2

[mm]

b)

spannungsentlastendes Zwischenstücks (3)

INCOLOY MA 956 (1)

Endzone (6)

Grenzzone (5)

Aktivlötfolie (4)

KERAMIK SiC (2)

Reaktionszone (7)

2,7 mm

3,5 mm

Ø 6 mm

a)

Fig. 4

$$S_2 + 0,4 S_2 = \sigma$$

Einwirkungsbereich auf den Längenausdehnungen von Mischungen.

$$S_1 + 0,4 S_1 = S_2$$

$$k + 0,4 k = S_1$$

$\frac{\Delta l}{l}$ /%/

g — $S_2$ — $S_1$ — 15%g — k — 30%k — /nm/

≥ 1 T | Endzone

Schichten mit einer abgestuften (———) Änderung oder eine innere Zone mit einer stufenlosen (•••••) Änderung der Längenausdehnungen von unterschidlichen Mischungen.

≥ 1 mm Grenzzone (Verstärkerschicht)

Ein Bauprinzip eines spannungsentlastenden Zwischenstückes und Einwirkungsbereich auf den Längenausdehnungen von Mischungen durch zweckmäßige Wahl der Arten und Anteile der Korn- und Matrixmaterialien.

Teilkörper mit größerer Längenausdehnung (g) (z.B. Incoloy MA 956 - Legierung)

Endzone

spannungsentlastendes Zwischenstück

Grenzzone

Teilkörper mit kleinerer Längenausdehnung (k) (z.B. SiC-Keramik)

Aktivlötfolie

Ein Längsschnitt eines Verbundgebildes aus Teilkörpern mit unterschiedlichen Längenausdehnungen.

Fig. 5

Längenausdehnungsgrößen der ausgesuchten Korn- und Matrixmaterialien in Abhängigkeit von der Temperatur.
(zum vergleich wurden die Längenausdehnungsgrößen der gewählten Konstruktionswerkstoffen gegeben).

Fig. 6

EP 0 394 828 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | DE - A1 - 3 514 320 <br> (NGK SPARK PLUG CO., LTD.) <br> * Gesamt * <br> -- | 1,5-7, 10-12, 18-20 | C 04 B 37/02 <br> B 32 B 7/00 <br> B 32 B 18/00 <br> B 23 K 35/22 <br> B 23 K 35/20 |
| D,X | GB - A - 1 575 443 <br> (BRUNSWICK CORPORATION) <br> * Gesamt * <br> ---- | 1,18, 20 | |

RECHERCHIERTE
SACHGEBIETE (Int Cl⁵)

C 04 B
B 23 K
B 32 B

Der vorliegende Recherchenbericht wurde für alle Patentansprüche erstellt.

| Recherchenort | Abschlußdatum der Recherche | Prüfer |
|---|---|---|
| WIEN | 01-08-1990 | BECK |